# EUROPEAN PATENT APPLICATION

(11) **EP 1 912 219 A1**
(43) Date of publication of application: **16.04.2008**
(21) Application number: 07117290.2
(22) Date of filing: 26.09.2007
(51) Int. Cl.: G11B 20/10, G11B 20/00

(54) **Playback apparatus and playback method**

(30) Priority: 13.10.2006 JP 2006280415
(71) Applicant: Kabushiki Kaisha Toshiba, Minato-ku, Tokyo 105-8001 (JP)
(72) Inventor: Tobita, Yoshikata, c/oToshiba Corporation, Tokyo 105-8001 (JP); Haruki, Kosuke, c/o Toshiba Corporation, Tokyo 105-8001 (JP); Shiomi, Yoshikazu, c/o Toshiba Corporation, Tokyo 105-8001 (JP)
(74) Representative: Henkel, Feiler & Hänzel

(57) **Abstract**

A playback apparatus includes a data read-out unit (101) which reads out digital content from a storage medium, a copy control information update process unit (301) which executes, if a second copy control information is defined in a file stored in the storage medium, a process of replacing a first copy control information which is embedded in the digital content that is read out of the storage medium, with the second copy control information, and a copy restriction process unit (201) which analyzes the digital content that is output from the copy control information update process unit (301) and executes a copy restriction process for restricting copy of the digital content, in accordance with one of the first copy control information and the second copy control information, which is embedded in the digital content.

## Description

The present invention relates to a playback apparatus which plays back digital content that is stored in storage media, and to a playback method.

In recent years, with the progress in digital compression-encoding technology of motion video, the development of a playback apparatus (player) which can handle high-definition video of the HD (High Definition) standard has been promoted.

In this kind of player, storage media, such as an HD DVD (High Definition Digital Versatile Disc), are used. With the use of the storage media such as the HD DVD (High Definition Digital Versatile Disc), HD video data and high-quality surround audio data can be packaged on a single storage medium.

Conventionally, encryption technology, such as CSS (Content Scramble System), is known as a technique for protecting digital content, which is stored on storage media, from unlawful use.

Japanese Patent No. 3162046 discloses a stream of digital content, such as video data, in which copy control information is embedded. The copy control information is used in order to realize a copy protect function for restricting copy of digital content such as video data.

In the meantime, a copyright holder of digital content (content holder), in some cases, wishes to update copy control information for digital content. For example, the copy control information is changed from a value indicative of permission of analog output of video data to a value indicative of prohibition of analog output of video data.

However, a great deal of cost is needed in order to regenerate the entire stream of digital content which includes new copy control information.

If new copy control information is prepared as data that is independent from digital content, it becomes possible to change the content of copy control, which is applied to the digital content, without executing a process of regenerating the entire stream.

The system of an ordinary player, however, is designed on presupposition that copy control information is stored in a stream of digital content. Thus, the system configuration of the player has to be greatly altered in order to make it possible to execute the process of restricting copy of digital content on the basis of the data that is independent from the digital content.

The object of the present invention is to provide a playback apparatus and a playback method, which can change the content of copy control information without greatly altering the system configuration.

According to an aspect of the present invention, there is provided a playback apparatus which plays back digital content stored in a storage medium, comprising: a data read-out unit configured to read out the digital content from the storage medium, first copy control information being embedded in the digital content, and a file capable of defining second copy control information, which is to be applied to the digital content, being stored in the storage medium; a copy control information update process unit configured to execute, if the second copy control information is defined in the file, a copy control information update process of replacing the first copy control information, which is embedded in the digital content that is read out of the storage medium by the data read-out unit, with the second copy control information defined in the file; and a copy restriction process unit configured to analyze the digital content that is output from the copy control information update process unit and execute a copy restriction process of restricting copy of the digital content, in accordance with one of the first copy control information and the second copy control information, which is embedded in the digital content.

The invention can be more fully understood from the following detailed description when taken in conjunction with the accompanying drawings, in which:
FIG. 1 is an exemplary block diagram showing a structure of a playback apparatus according to an embodiment of the invention;
FIG. 2 is an exemplary block diagram showing a structure of a content check unit which is provided in the playback apparatus according to the embodiment;
FIG. 3 is an exemplary diagram showing a physical data structure of a storage medium which is used in the playback apparatus according to the embodiment;
FIG. 4 is an exemplary diagram showing a structure of content which is played back by the playback apparatus according to the embodiment;
FIG. 5 is an exemplary block diagram showing a functional structure of the playback apparatus according to the embodiment;
FIG. 6 shows an example of the data structure of content which is played back by the playback apparatus according to the embodiment;
FIG. 7 shows an example of the relationship between the content that is played back by the playback apparatus according to the embodiment, a title key file and a tile usage file;
FIG. 8 is an exemplary flowchart illustrating a procedure of a copy control information update process which is executed by the playback apparatus according to the embodiment;
FIG. 9 shows another example of the data structure of content which is played back by the playback apparatus according to the embodiment;
FIG. 10 is an exemplary flowchart illustrating another procedure of the copy control information update process which is executed by the playback apparatus according to the embodiment; and
FIG. 11 is an exemplary block diagram showing a hardware structure of the playback apparatus according to the embodiment.

An embodiment of the present invention will now be described with reference to the accompanying drawings.

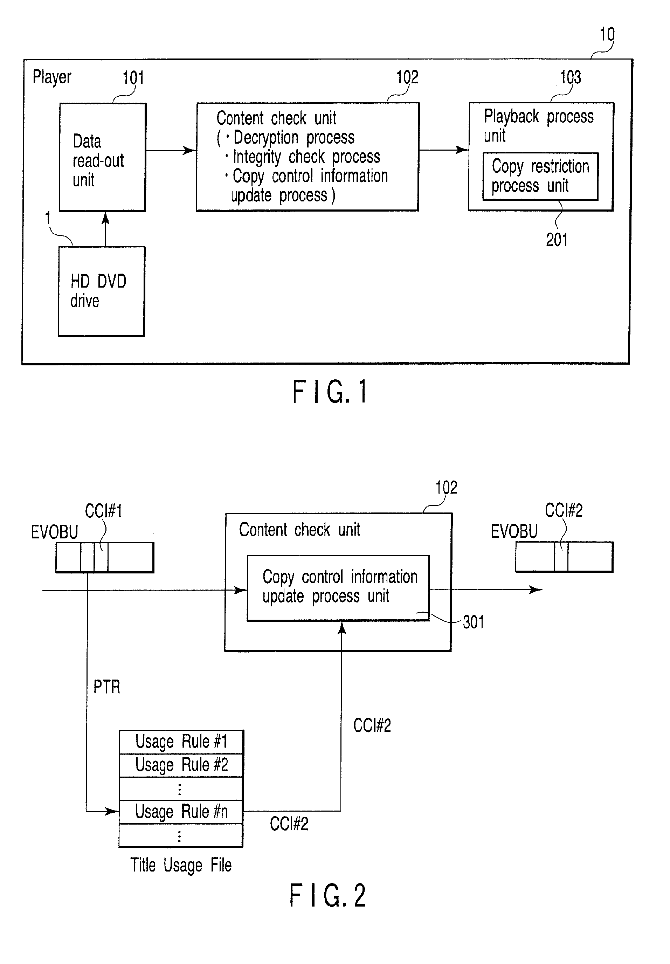

FIG. 1 shows an example of the structure of a playback apparatus according to an embodiment of the present invention. This playback apparatus is a player which plays back digital content which is composed of a data stream of, e.g. audio visual data. This playback apparatus is realized as an HD DVD (High Definition Digital Versatile Disc) player 10 which plays back digital content that is prestored in a storage medium such as an HD DVD medium. The HD DVD player 10 can play back not only digital content that is stored in a storage medium, but also digital content that is downloaded from a network server via a network such as the Internet.

As shown in FIG. 1, the HD DVD player 10 includes an HD DVD drive 1, a data read-out unit 101, a content check unit 102 and a playback process unit 103.

Digital content, which is stored in an optical disc medium (HD DVD medium) that is driven by the HD DVD drive 1, is, for instance, audio visual content such as movies or animation. The audio visual content is a stream in which video data and audio data are multiplexed. Needless to say, audio content that is composed of audio data alone may be stored in the optical disc medium.

The digital content includes a video object VOB such as an enhanced video object EVOB (primary enhanced video object P-EVOB or secondary enhanced video object S-EVOB) which is stipulated by the HD DVD standard. The video object VOB is composed of a plurality of video object units VOBU (e.g. a primary enhanced video object unit P-EVOBU or a secondary enhanced video object unit S-EVOBU, which is stipulated by the HD DVD standard). The video object unit VOBU is a data stream corresponding to a predetermined playback time, and includes compression-encoded video data and compression-encoded audio data. The digital content is encrypted in units of the video object unit VOBU such as P-EVOBU or S-EVOBU.

The data read-out unit 101 accesses the HD DVD drive 18, and reads the digital content that is stored in the HD DVD medium.

The content check unit 102 is a module for realizing a copyright protection function which is stipulated by Advanced Access Content System (AACS). The content check unit 102 is disposed between the data read-out unit 101 and playback process unit 103. The content check unit 102 executes a process of decrypting the digital content that is read out of the HD DVD medium by the data read-out unit 101, an integrity check process for confirming the integrity of the digital content, and a copy control information update process for updating, where necessary, the copy control information that is embedded in the stream of the digital content. The copy control information is information for designating the content of copy restriction, which is to be applied to the digital content. The copy control information is multiplexed on the stream of each video object unit VOBU (P/S-EVOBU).

The copy control information includes, e.g. copy generation management information, analog output control information and APS (Analog Protection System) information. The copy generation management information is information which designates permission/prohibition of copy, a possible number of times of copy, etc. The analog output control information is information which designates permission/prohibition of output of an analog output signal corresponding to video data. The APS control information is information which designates whether or not to apply copy guard, such as APS (also referred to as "microvision"), to an analog output signal corresponding to video data.

The copy control information update process is executed when effective copy control information for update is defined in a file which is called "title usage file (TUF)" stored in the HD DVD medium. In the copy control information update process, the copy control information, which is embedded in the stream of digital content that is read out of the HD DVD medium, is replaced with copy control information for update, which is defined in the title usage file (TUF). The stream of digital content, in which the copy control information for update is embedded, is sent to the playback process unit 103.

The playback process unit 103 executes a playback process for playing back the digital content, which has been decrypted by the content check unit 102 and of which the integrity has been confirmed. In the playback process, for example, a process of decoding video data and audio data, which are included in each video object unit VOBU, such as P-EVOBU or S-EVOBU, is executed.

Further, the playback process unit 103 includes a copy restriction process unit 201. The copy restriction process unit 201 analyzes the stream of digital content, which is output from the content check unit 102, and executes a copy restriction process for restricting copy of the digital content, in accordance with the copy control information that is embedded in the stream of digital content.

In the copy restriction process, for example, one of the following processes is executed: (1) a process of prohibiting output of an analog output signal corresponding to video data, and (2) a process of applying copy guard, such as APS (also referred to as "microvision"), to an analog output signal. The process (1) and process (2) are executed in accordance with the analog output control information and APS control information. Each of the process (1) and process (2) can also be executed in accordance with the copy generation management information.

The copy control information is present in a navigation pack within each video object unit VOBU such as P-EVOBU or S-EVOBU.

The copy restriction process unit 201 in the playback process unit 103 detects the navigation pack from each video object unit VOBU (P/S-EVOBU) by analyzing the stream, and executes the above-described copy restriction process in accordance with the copy control information included in the navigation pack. The copy control information included in the navigation pack in the P/S-EVOBU that is input to the copy restriction process unit 201 is one of the original copy control information and the copy control information for update, which is defined in the title usage file (TUF).

FIG. 2 shows the functional structure of the content check unit 102.

The content check unit 102 includes a copy control information update process unit 301 which executes the above-described copy control information update process.

If effective copy control information for update (CCI#2) is defined in the title usage file (TUF), the copy control information update process unit 301 executes the copy control information update process of replacing the original copy control information (CCI#1), which is embedded in the stream of digital content that is read out of the HD DVD medium, with the copy control information for update (CCI#2). This copy control information update process is executed in units of the video object unit VOBU such as P-EVOBU or S-EVOBU.

Specifically, the digital content includes a plurality of successive video object units (P/S-EVOBU). The title usage file (TUF) includes a plurality of entries for storing usage rule information indicative of usage rules which are to be applied to the digital content. Copy control information for update can be included in the usage rule information in each entry. Each video object unit (P/S-EVOBU) includes a pointer (PTR) indicative of the entry in the title usage file (TUF), which stores the usage rule information that is to be applied to the video object unit (P/S-EVOBU).

Each time the P/S-EVOBU is read out by the data read-out unit 101, the copy control information update process unit 301 determines whether effective copy control information for update (CCI#2) is defined in the entry in the title usage file (TUF), which is designated by the pointer (PTR) included in the read-out P/S-EVOBU. If the effective copy control information for update (CCI#2) is defined, the copy control information update process unit 301 replaces the original copy control information (CCI#1), which is included in the P/S-EVOBU, with the copy control information for update (CCI#2).

Accordingly, the copy control information update process unit 301 can output the P/S-EVOBU, in which the copy control information for update (CCI#2) is embedded, to the copy restriction process unit 201. The copy restriction process unit 201 can execute the copy restriction process according to the copy control information for update (CCI#2), simply by executing the process of detecting the copy control information in the P/S-EVOBU by analyzing the stream of the P/S-EVOBU.

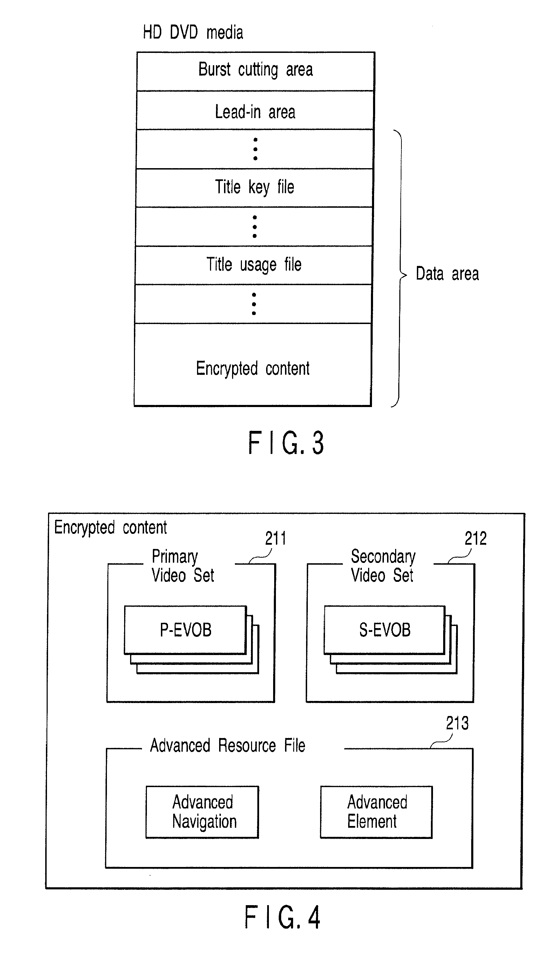

FIG. 3 shows an example of the physical data structure of the HD DVD medium.

In the HD DVD medium, there are provided a burst cutting area, a lead-in area and a data area in the named order from the innermost periphery of the HD DVD medium. The data area stores, for instance, an encrypted title key file, the above-described title usage file, and encrypted digital content. The title key file is composed of a plurality of entries which include title keys, respectively. The title key is a key (title key) which is used in order to derive a key (content key) for decrypting the EVOB.

FIG. 4 shows the structure of the encrypted digital content.

In the HD DVD medium, encrypted digital content, which includes a primary video set 211, a secondary video set 212 and an advanced resource file (ARF) 213, can be recorded.

The primary video set 211 is a title set including compression-encoded main video data and compression-encoded main audio data, and is composed of at least one primary enhanced video object (P-EVOB). In short, the P-EVOB is a main AV data stream.

The secondary video set 212 is a video set for complementing the primary video set, is a title set including compression-encoded sub-video data and compression-encoded sub-audio data, and is composed of at least one secondary enhanced video object (S-EVOB). In short, the S-EVOB is a sub-AV data stream.

The advanced resource file (ARF) 213 is composed of an advanced navigation and an advanced element. The advanced navigation is navigation data for controlling the playback procedure of digital content, and is composed of an XML (extensible Markup Language) document and an ECMA (International-European association for standardizing information and communication systems) script. The navigation data includes, for instance, a description of a playback sequence, a description of a menu, and a description of an action associated with a menu button. The advanced element is data which is used in order to realize interactive content playback, and is composed of a still image, animation, fonts, sound effects, etc.

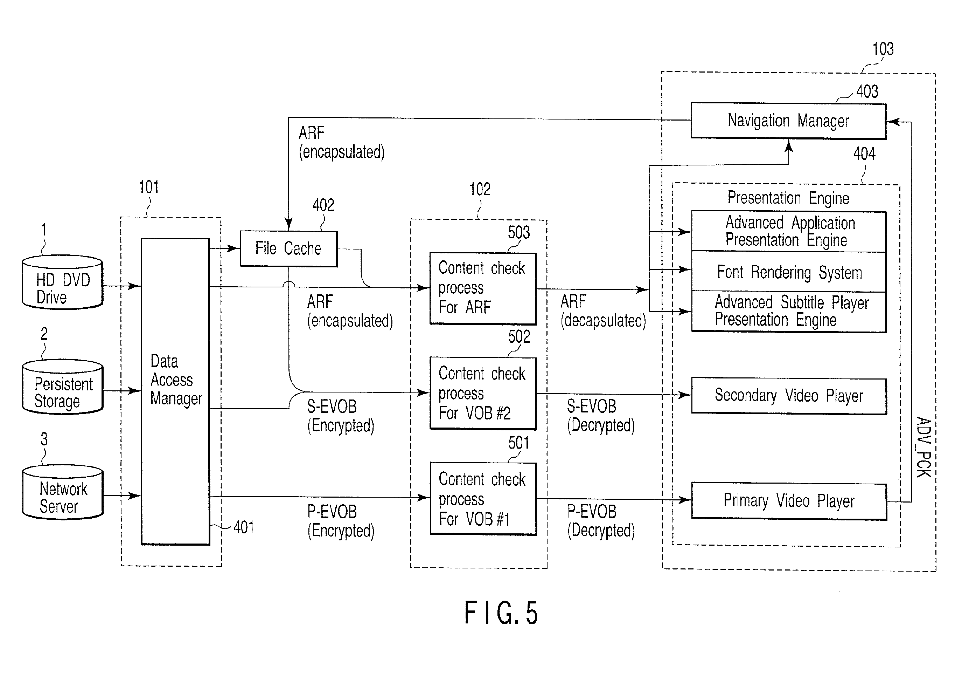

Next, referring to FIG. 5, an example of the concrete functional structure of the player 10 is described.

The player 10 includes, in addition to the above-described HD DVD drive 1, a storage device (persistent storage) 2, a data access manager 401, a file cache 402, a navigation manager 403, a presentation engine 404, and content check process modules 501 to 503.

The data access manager 401 acquires digital content from the HD DVD drive 1, the storage device (persistent storage) 2 such as a nonvolatile memory, or from a network server 3 via a network. The data access manager 401 corresponds to the above-described data read-out unit 101.

The content check process modules 501 to 503 are modules that constitute the above-described content check unit 102. The content check process module 501 executes the above-described decryption process, integrity check process and copy control information update process for the P-EVOB stream. The content check process module 502 executes the above-described decryption process, integrity check process and copy control information update process for the S-EVOB stream. The content check process module 503 executes the above-description decryption process and integrity check process for the ARF. The ARF is protected by making use of encapsulation.

An advanced navigation pack ADV_PCK is multiplexed on the stream of the P-EVOB that is read by the data access manager 401. The ADV_PCK is a packet for carrying the ARF. Each ADV_PCK includes partial data that is a part of the ARF.

The navigation manager 403 and presentation engine 404 function as the above-described playback process unit 103. The presentation engine 404 includes a primary video player and a secondary video player.

The primary video player decodes the stream of the P-EVOB and plays back the stream of the P-EVOB. The primary video player also includes a function of executing the above-described copy restriction process on the basis of the copy control information that is included in each P-EVOBU. The ADV_PCK, which is multiplexed on the P-EVOB, is stored in the file cache 402 via the navigation manager 403.

The secondary video player decodes the stream of the S-EVOB and plays back the stream of the S-EVOB. The secondary video player also includes a function of executing the above-described copy restriction process on the basis of the copy control information that is included in each S-EVOBU. The presentation engine 404 also includes, as modules for playing back the advanced element, an advanced application presentation engine, a font rendering engine and an advanced subtitle player.

The navigation manager 403 interprets the advanced navigation in the ARF, and controls the operation of the presentation engine 404 on the basis of the result of the interpretation.

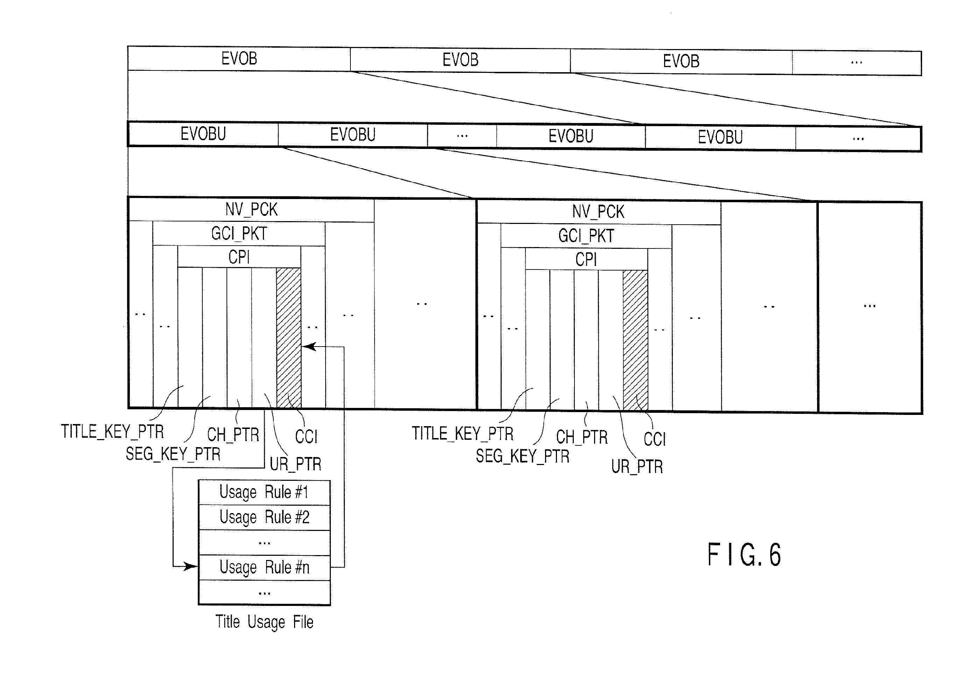

Next, referring to FIG. 6, how the copy control information is updated is explained.

FIG. 6 illustrates the structure of A/V data of HD DVD VIDEO that is protected by AACS, and the concept of the copy control information update process. As shown in FIG. 6, digital content, i.e. A/V data of HD DVD VIDEO that is protected by AACS, includes copy control information (CCI) in units of EVOBU (P/S-EVOBU). Each EVOBU includes a navigation pack (NV_PCK) in addition to a video pack, an audio pack, etc. A GCI (General Control Information) packet GCI_PKT in the navigation pack (NV_PCK) includes content protection information CPI. The content protection information CPI includes a title key pointer (TITLEI_KEY_PTR) indicative of a corresponding entry in the title key file, a usage rule pointer (UR_PTR) indicative of a corresponding entry in the title usage file, and copy control information (CCI).

The title usage file, as described above, includes a plurality of entries. The copy control information can be defined, as one of usage rules, in each entry. In addition, in each entry, flag information (PRIORITY FLAG), which is indicative of whether the copy control information defined in the entry is effective or not, is set. Referring to the flag information (PRIORITY FLAG) in the entry of the title usage file that is designated by the usage rule pointer (UR_PTR), the copy control information update process unit 301 of the content check unit 102 determines whether effective copy control information for update is defined in this entry. If the flag information (PRIORITY FLAG) indicates that the copy control information defined in the entry is effective, the copy control information update process unit 301 replaces the copy control information in the navigation pack (NV_PCK) with the copy control information in the entry that is designated by the usage rule pointer (UR_PTR).

In the usage rule information, information indicative of the possible playback period of the associated P/S-EVOB, as well as the copy control information, can be defined.

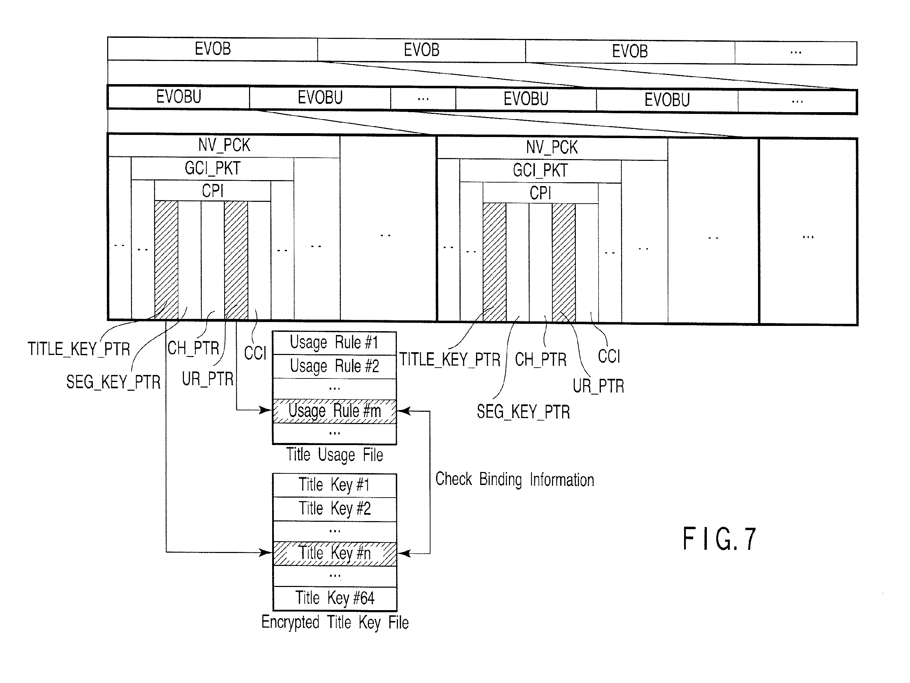

Next, referring to FIG. 7, a description is given of the relationship between the entry in the title key file and the entry in the title usage file.

In order to ensure that the combination of the title key file and the title usage file is a correct one, the copy control information update process unit 301 confirms whether binding information stored in the entry in the title key file, which is designated by the title key pointer (TITLE_KEY_PTR) in the navigation pack (NV_PCK), agrees with binding information stored in the entry in the title usage file, which is designated by the usage rule pointer (UR_PTR) in the navigation pack (NV_PCK). The binding information is information that indicates to what the title key/usage rule is related. The copy control information update process is executed when the agreement of the binding information is confirmed.

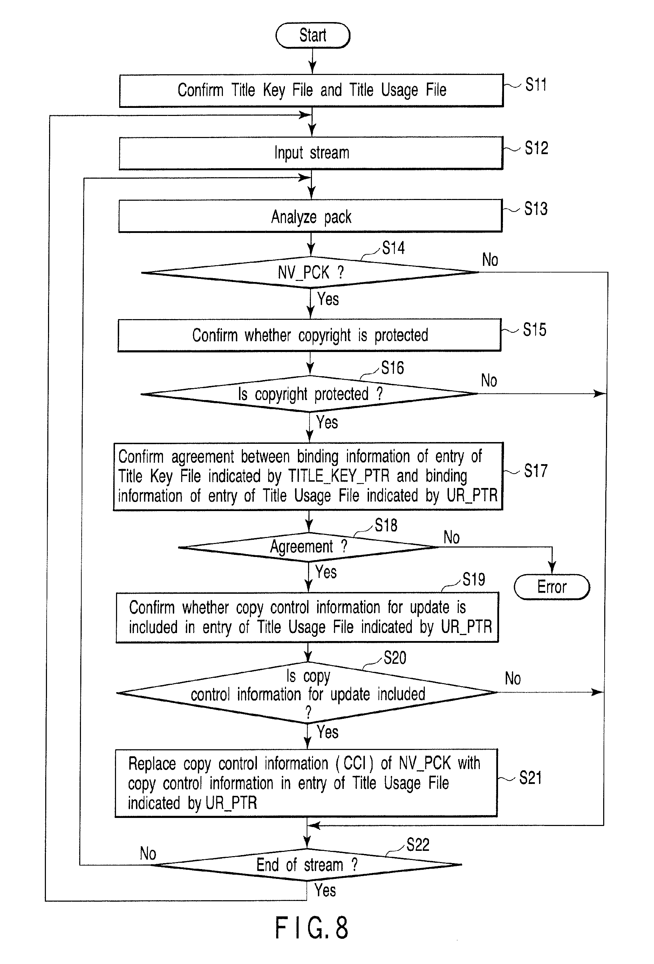

Next, referring to a flow chart of FIG. 8, the procedure of the copy control information update process is described.

Before the playback of digital content is started, the content check unit 102 confirms the integrity of each of the title key file and the title usage file (step S11). In step S11, the content check unit 102 determines whether the title key file is integral or not, by using, for example, signature information that is added to the title key file. In addition, in order to confirm the integrity of the title usage file, the content check unit 102 calculates, for example, the hash value of the title usage file, and determines whether the calculated hash value agrees with the hash value which is pre-stored in the HD DVD medium. The pre-stored hash value is the hash value of the title usage file.

If the integrity of each of the title key file and the title usage file has been confirmed, the playback of the digital content is started. The content check unit 102 inputs the stream of P/S-EVOBU (step S12). Then, the content check unit 102 analyzes each pack in the P/S-EVOBU, and determines whether the currently input pack is NV_PCK (step S13, S14).

If the currently input pack is NV_PCK (YES in step S14), the content check unit 102 determines whether the NV_PCK is protected by copyright (AACS protection), for example, by referring to the scramble bit in the NV_PCK (step S15).

If the NV_PCK is protected by copyright (YES in step S16), the content check unit 102 determines whether the binding information in the entry in the title key file, which is designated by the TITLE_KEY_PTR in the NV_PCK, agrees with the binding information in the entry in the title usage file which is designated by the UR_PTR in the NV_PCK (step S17).

If the binding information agrees (YES in step S18), the content check unit 102 determines whether effective copy control information for update is included in the entry in the title usage file that is indicated by the UR_PTR (step S19). In step S19, the content check unit 102 determines that effective copy control information for update is included in the entry in the title usage file indicated by the UR_PTR, for example, on condition that copy control information CCI for update is included in the entry in the title usage file indicated by the UR_PTR and that the value of flag information (PRIORITY FLAG) in this entry indicates that the copy control information is effective.

If the effective copy control information for update is included (YES in step S20), the content check unit 102 replaces the original CCI in the NV_PCK with the copy control information CCI for update in the entry in the title usage file indicated by the UR_PTR (step S21).

Thereafter, the content check unit 102 determines whether the current pack is the last pack in the P/S-EVOBU (step S22). If the current pack is the last pack in the P/S-EVOBU (YES in step S22), the content check unit 102 advances to step S12, and inputs the stream of the next P/S-EVOBU.

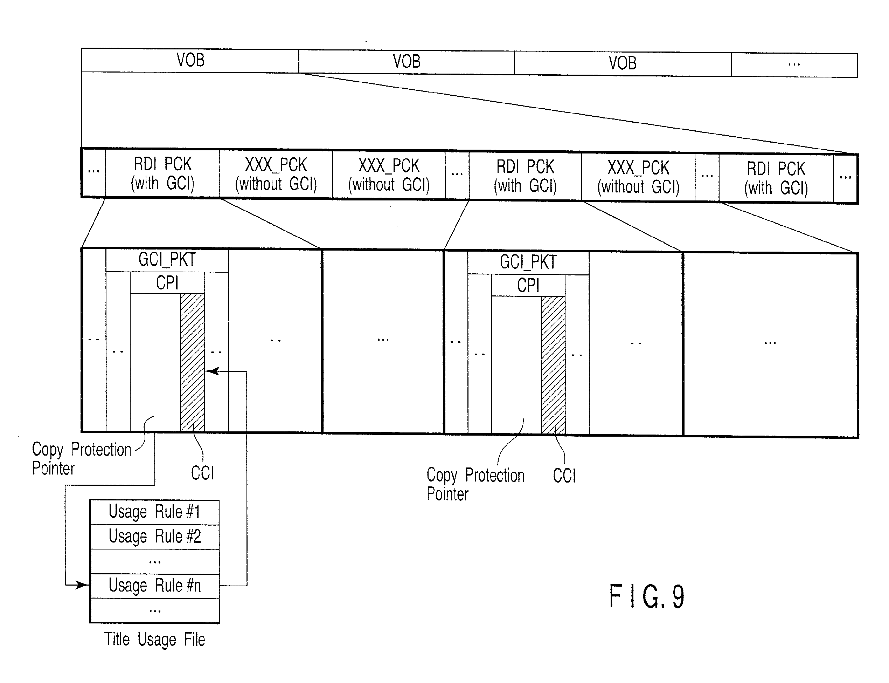

FIG. 9 shows the structure of A/V data (VOB) of the HD DVD VR (Video Recording) protected by AACS, and the concept of the copy control information update process.

The A/V data (VOB) of the HD DVD VR includes copy control information (CCI) in the pack in the stream, which is called "RDI_PCK (Real-time Data Information Pack)". In addition, a copy protection pointer is stored in the RDI PCK. The copy protection pointer is information indicative of the entry of the title usage file. The copy control information update process unit 301 replaces the CCI of the RDI_PCK with the CCI stored in the entry in the title usage file that is designated by the copy protection pointer.

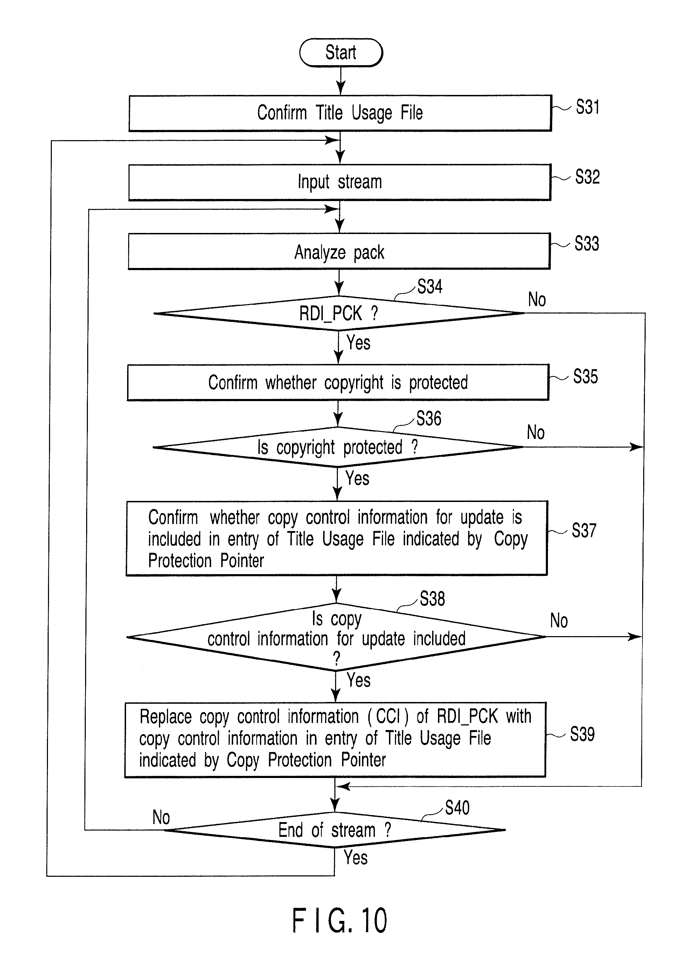

Next, referring to a flow chart of FIG. 10, the procedure of the copy control information update process for the A/V data of HD DVD VR is described.

Before the playback of digital content is started, the content check unit 102 confirms the integrity of the title usage file (step S31). If the integrity of the title usage file has been confirmed, the playback of the digital content is started. The content check unit 102 inputs the stream of VOB (step S32). Then, the content check unit 102 analyzes each pack in the VOB, and determines whether the currently input pack is RDI_PCK (step S33, S34).

If the currently input pack is RDI_PCK (YES in step S34), the content check unit 102 determines whether the RDI_PCK is protected by copyright (step S35).

If the RDI_PCK is protected by copyright (YES in step S36), the content check unit 102 determines whether effective copy control information for update is included in the entry in the title usage file that is indicated by the copy protection pointer in the RDI_PCK (step S37).

If the effective copy control information for update is included (YES in step S38), the content check unit 102 replaces the original CCI in the RDI_PCK with the copy control information CCI for update, which is stored in the entry in the title usage file indicated by the copy protection pointer (step S39).

Thereafter, the content check unit 102 determines whether the current pack is the last pack in the VOB (step S40). If the current pack is the last pack in the VOB (YES in step S40), the content check unit 102 advances to step S32, and inputs the stream of the next VOB.

As has been described above, in the player 10, the content check unit 102 is disposed between the data read-out unit 101 and the playback process unit 103, and the content check unit 102 replaces, as needed, the copy control information in the stream with the copy control information for update, which is stored in the title usage file. Thus, the playback process unit 103 can execute the copy restriction process corresponding to the updated copy control information, simply by executing the copy restriction process on the basis of the copy control information in the stream, without taking care of the title usage file.

Therefore, the copy control information of the title usage file can be used for the copy control of the stream, without making a major change to the system configuration of the ordinary DVD playback apparatus.

In addition, the process of changing the copy control information, which is an important process in copyright protection technology, can be executed within the content check unit 102. Thereby, the process of, e.g. integrity check of the copy control information may not be executed in the playback process unit 103, etc.

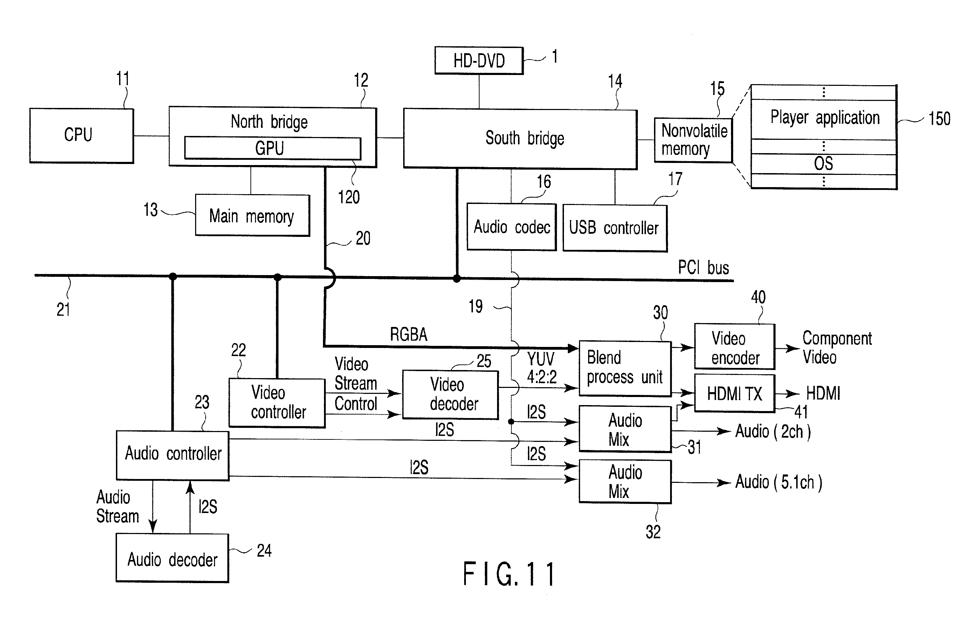

Next, referring to FIG. 11, a specific example of the hardware structure of the player 10 is described.

The player 10 comprises a CPU (Central Processing Unit) 11, a north bridge 12, a main memory 13, a south bridge 14, a nonvolatile memory 15, an audio codec 16, a USB (Universal Serial Bus) controller 17, an HD DVD drive 1, an audio bus 19, a graphics bus 20, a PCI (Peripheral Component Interconnect) bus 21, a video controller 22, an audio controller 23, an audio decoder 24, a video decoder 25, a blend process unit 30, audio mixers (Audio Mix) 31, 32, a video encoder 40, and an AV interface (HDMI-TX) 41 such as an HDMI (High Definition Multimedia Interface).

In this player 10, a player application 150 and an operating system (OS) are preinstalled in the nonvolatile memory 15. The player application 150 is software that runs on the OS, and executes a control to play back digital content that is acquired from the HD DVD drive 1 or a network server. The data read-out unit 101 and content check unit 102, which have been described with reference to FIG. 1, can be realized by the player application 150. In addition, parts (the copy restriction process and a part of the decoding process), which have been described with reference to FIG. 1, can also be realized by the player application 150.

The CPU 11 is a processor which is provided in order to control the operation of the player 10. The CPU 11 executes the OS and player application 150, which are loaded from the nonvolatile memory 15 into the main memory 13. The north bridge 12 is a bridge device that connects a local bus of the CPU 11 and the south bridge 14. The north bridge 12 includes a memory controller that access-controls the main memory 13. The north bridge 12 also includes a GPU (Graphics Processing Unit) 120.

The GPU 120 is a graphics controller that generates graphics data (also referred to as "graphics image data"), which forms a graphics screen image, from data that is written by the CPU 11 in a video memory (VRAM) which is assigned to a part of the memory area of the main memory 13. The GPU 120 generates graphics data by using a graphics arithmetic function such as bit block transfer. For example, in a case where image data (sub-video, sub-picture, etc.) are written in three planes in the VRAM by the CPU 11, the GPU 120 executes a blending process, with use of bit block transfer, which blends the image data corresponding to the three planes on a pixel-by-pixel basis, thereby generating graphics data for forming a graphics screen image with the same resolution (e.g. 1920 × 1080 pixels) as the main video.

The GPU 120 sends graphics data with alpha data (RGBA data) to the blend process unit 30 over the graphics bus 20. The graphics data with alpha data (RGBA data) is composed of the graphics data (digital RGB video signal) and alpha data (A).

The south bridge 14 controls the devices on the PCI bus 21. The south bridge 14 includes an IDE (Integrated Drive Electronics) controller for controlling the HD DVD drive 1. Further, the south bridge 14 has a function of accessing the nonvolatile memory 15, USB controller 17 and audio codec 16.

The HD DVD drive 1 is a drive unit for driving storage media such as HD DVD media that stores audio/video (AV) content according to the HD DVD standard.

The audio codec 16 converts sub-audio data, which is decoded by software, to a digital audio signal of an I2S (Inter-IC Sound) format. The audio codec 16 is connected to the audio mixers (Audio Mix) 31 and 32 over the audio bus 19. The audio bus 19 is a transmission line which is connected between the audio codec 16 and the audio mixers (Audio Mix) 31 and 32. The digital audio signal from the audio codec 16 is transferred to the audio mixers (Audio Mix) 31 and 32 through the audio bus 19, and not through the PCI bus 21.

The video controller 22 is connected to the PCI bus 21. The video controller 22 is an LSI for executing interface with the video decoder 25. A stream (Video Stream) of main video data, which is separated from the HD DVD stream by software, is sent to the video decoder 25 via the PCI bus 21 and video controller 22. In addition, decode control information (Control) that is output from the CPU 11 is sent to the video decoder 25 via the PCI bus 21 and video controller 22.

The video decoder 25 decodes main video data and generates a digital YUV video signal that forms a video screen image with a resolution of, e.g. 1920 × 1080 pixels. The digital YUV video signal is sent to the blend process unit 30.

The audio controller 23 is connected to the PCI bus 21. The audio controller 23 is an LSI for executing interfaces with the audio decoder 24. A stream (Audio Stream) of main audio data, which is separated from the HD DVD stream by software, is sent to the audio decoder 24 via the PCI bus 21 and audio controller 23.

The audio decoder 24 decodes the main audio data and generates an I2S (Inter-IC Sound) format digital audio signal. This digital audio signal is sent to the audio mixers (Audio Mix) 31 and 32 via the audio controller 23.

The blend process unit 30 is connected to the GPU 120 and video decoder 25, and executes a blending process of blending graphics data, which is output from the GPU 120, and main video data, which is decoded by the video decoder 25. Specifically, this blending process is a blending process (alpha blending process) for blending, on a pixel-by-pixel basis, the digital RGB video signal, which forms the graphics data, and the digital YUV video signal, which forms the main video data, on the basis of the alpha data that is output along with the graphics data (RGB) from the GPU 120. In this case, the main video data is used as a lower-side screen image, and the graphics data is used as an upper-side screen image that is overlaid on the main video data.

The output image data that is obtained by the blending process is delivered, for example, as a digital YUV video signal, to the video encoder 40 and AV interface (HDMI-TX) 41. The video encoder 40 converts the output image data (digital YUV video signal), which is obtained by the blending process, to a component video signal or an S-video signal, and outputs it to an external display device (monitor) such as a TV receiver. The AV interface (HDMI-TX) 41 outputs digital signals including the digital YUV video signal and digital audio signal to an external HDMI device.

The audio mixer (Audio Mix) 31 mixes the sub-audio data, which is decoded by the audio codec 16, and the main audio data, which is decoded by the audio decoder 24, and outputs the mixed data as a stereo audio signal. The audio mixer (Audio Mix) 32 mixes the sub-audio data, which is decoded by the audio codec 16, and the main audio data, which is decoded by the audio decoder 24, and outputs the mixed data as a 5.1-channel audio signal.

All the functions of the player 10 shown in FIG. 1 can be realized by a computer program. Thus, an ordinary computer can be made to function as the playback apparatus 10 simply by installing the computer program into the ordinary computer through a computer-readable storage medium in which the program is stored. In this case, all the decoding processes may be executed by software, but the decoding processes may partly or entirely be executed by hardware.

In the present embodiment, content that is composed of audio visual data including video data and audio data has been described by way of example. However, the scheme of the copy control information update process according to the present embodiment is also applicable to digital content that is composed of video data alone, or to digital content that is composed of audio data alone.

## Claims

1. A playback apparatus which plays back digital content stored in a storage medium, **characterized by** comprising:
a data read-out unit (101) configured to read out the digital content from the storage medium, first copy control information being embedded in the digital content, and a file capable of defining second copy control information, which is to be applied to the digital content, being stored in the storage medium;
a copy control information update process unit (301) configured to execute, if the second copy control information is defined in the file, a copy control information update process of replacing the first copy control information, which is embedded in the digital content that is read out of the storage medium by the data read-out unit (101), with the second copy control information defined in the file; and
a copy restriction process unit (201) configured to analyze the digital content that is output from the copy control information update process unit (301) and execute a copy restriction process of restricting copy of the digital content, in accordance with one of the first copy control information and the second copy control information, which is embedded in the digital content.

2. The playback apparatus according to claim 1, **characterized in that** the copy control information update process unit (301) verifies integrity of the file, and executes the copy control information update process if the integrity of the file is confirmed and the second copy control information is defined in the file.

3. The playback apparatus according to claim 1, **characterized in that** flag information, which indicates whether the second copy control information defined in the file is effective or not, is stored in the file, and
the copy control information update process unit (301) executes the copy control information update process if the flag information indicates that the second copy control information defined in the file is effective.

4. The playback apparatus according to claim 1, **characterized in that** the digital content includes a plurality of video object units,
the file includes a plurality of entries each for storing usage rule information indicative of a usage rule that is to be applied to the digital content, and each of the video object units includes a pointer indicative of an entry in the file, which stores the usage rule information to be applied to the video object unit, and
the copy control information update process unit (301) determines, each time the video object unit is read out of the storage medium by the data read-out unit (101), whether the second copy control information is defined in the entry in the file, which is designated by the pointer included in the read-out video object unit, and the copy control information update process unit (301) replaces, if the second copy control information is defined, the first copy control information included in the read-out video object unit with the second copy control information defined in the entry designated by the pointer.

5. A playback method of playing back digital content stored in a storage medium, **characterized by** comprising:
reading out the digital content from the storage medium, first copy control information being embedded in the digital content, and a file capable of defining second copy control information, which is to be applied to the digital content, being stored in the storage medium;
executing, if the second copy control information is defined in the file, a copy control information update process of replacing the first copy control information, which is embedded in the digital content that is read out of the storage medium, with the second copy control information defined in the file; and
analyzing the digital content that is read out of the storage medium and executing a copy restriction process of restricting copy of the digital content, in accordance with one of the first copy control information and the second copy control information, which is embedded in the digital content.

6. The playback method according to claim 5, **characterized by** further comprising verifying integrity of the file,
wherein the copy control information update process is executed if the integrity of the file is confirmed and the second copy control information is defined in the file.

7. The playback method according to claim 5, **characterized in that** flag information, which indicates whether the second copy control information defined in the file is effective or not, is stored in the file, and
the copy control information update process is executed if the flag information indicates that the second copy control information defined in the file is effective.

8. The playback method according to claim 5, **characterized in that** the digital content includes a plurality of video object units,
the file includes a plurality of entries each for storing usage rule information indicative of a usage rule that is to be applied to the digital content, and each of the video object units includes a pointer indicative of an entry in the file, which stores the usage rule information to be applied to the video object unit, and
the copy control information update process includes a process of determining, each time the video object unit is read out of the storage medium, whether the second copy control information is defined in the entry in the file, which is designated by the pointer included in the read-out video object unit, and a process of replacing, if the second copy control information is defined, the first copy control information included in the read-out video object unit with the second copy control information defined in the entry designated by the pointer.

9. A program which is stored in a computer-readable medium and causes a computer to execute a process of playing back digital content stored in a storage medium, **characterized by** comprising:
causing the computer to execute a process of reading out the digital content from the storage medium, first copy control information being embedded in the digital content, and a file capable of defining second copy control information, which is to be applied to the digital content, being stored in the storage medium;
causing the computer to execute, if the second copy control information is defined in the file, a copy control information update process of replacing the first copy control information, which is embedded in the digital content that is read out of the storage medium, with the second copy control information defined in the file; and
causing the computer to analyze the digital content that is read out of the storage medium and to execute a copy restriction process of restricting copy of the digital content, in accordance with one of the first copy control information and the second copy control information, which is embedded in the digital content.

10. The program according to claim 9, **characterized by** further comprising causing the computer to execute a process of verifying integrity of the file,
wherein the copy control information update process is executed if the integrity of the file is confirmed and the second copy control information is defined in the file.

11. The program according to claim 9, **characterized in that** flag information, which indicates whether the second copy control information defined in the file is effective or not, is stored in the file, and
the copy control information update process is executed if the flag information indicates that the second copy control information defined in the file is effective.

12. The program according to claim 9, **characterized in that** the digital content includes a plurality of video object units,
the file includes a plurality of entries each for storing usage rule information indicative of a usage rule that is to be applied to the digital content, and each of the video object units includes a pointer indicative of an entry in the file, which stores the usage rule information to be applied to the video object unit, and
the copy control information update process includes a process of determining, each time the video object unit is read out of the storage medium, whether the second copy control information is defined in the entry in the file, which is designated by the pointer included in the read-out video object unit, and a process of replacing, if the second copy control information is defined, the first copy control information included in the read-out video object unit with the second copy control information defined in the entry designated by the pointer.
